# EUROPÄISCHE PATENTSCHRIFT

(11) **EP 2 732 922 B1**
(45) Veröffentlichungstag und Bekanntmachung des Hinweises auf die Patenterteilung: **25.12.2019**
(21) Anmeldenummer: 13005052.9
(22) Anmeldetag: 23.10.2013
(51) Int. Cl.: B25B 23/142, G02B 27/01

(54) **Drehmomentwerkzeug mit Anzeigensystem**
Torque tool with display system
Outil dynamométrique avec système d'affiche

(30) Priorität: 16.11.2012 DE 202012104427 U
(43) Veröffentlichungstag der Anmeldung: 21.05.2014
(73) Patentinhaber: STAHLWILLE Eduard Wille GmbH & Co. KG, 42349 Wuppertal (DE)
(72) Erfinder: Backhaus, Michael, 44388 Dortmund (DE)
(74) Vertreter: Willems, Volker

(56) Entgegenhaltungen:
- EP-A1- 1 980 363
- EP-A2- 1 743 742
- WO-A1-2011/028362
- DE-T5-112008 000 168
- DE-U1-202008 018 265
- DE-U1-202010 015 259
- GB-A- 2 380 044
- US-A1- 2007 180 674
- US-A1- 2008 319 570

## Beschreibung

### Technisches Gebiet

Die Erfindung betrifft ein Drehmomentwerkzeug mit einem Anzeigensystem, welches zum Messen und/oder Ausbringen eines Drehmoments vorgesehen ist, enthaltend
a) ein Gehäuse mit einem Griff am einen Ende, wobei eine Messeinrichtung zum Erfassen des Drehmoments in dem Gehäuse angeordnet ist,
b) ein Verbindungsglied an dem anderen Ende des Gehäuses, welches das Drehmoment zu einem Werkstück überträgt,
c) eine prozessorgesteuerte Steuereinrichtung zur digitalen Verarbeitung der eingestellten und/oder gemessenen Daten,
d) eine Anzeige, welche mit der Steuereinrichtung kooperiert und graphische Anzeigeninhalte und/oder Daten, wie das jeweils anliegende bzw. eingestellte Drehmoment anzeigt und
e) eine Übertragungs- und eine als separate Darstellungsvorrichtung zur Übertragung und Darstellung der graphischen Anzeigeninhalte und/oder der Daten.

### Stand der Technik

Die Verschraubung ist die am häufigsten genutzte Verbindung im Maschinenbau. Solche Verbindungselemente können nur durch die Verwendung geeigneter Montagewerkzeuge wirksam werden. Zu den hierfür geeigneten Montagewerkzeugen zählen Drehmomentwerkzeuge, wie sie eingangs genannt sind. Drehmomentwerkzeuge werden benötigt, um an einem Werkstück ein bestimmtes Drehmoment auszuüben. Als Drehmomentwerkzeuge sind beispielsweise Drehmomentschlüssel oder Drehmomentschraubendreher bekannt.

Das bei der Verwendung handgeführter Werkzeuge zu übertragende Drehmoment ist hierbei sowohl von der physischen Konstitution des Benutzers als auch von dessen subjektiven Kraftempfinden abhängig. Drehmomentwerkzeuge werden eingesetzt, um eine Schraube mit einer hohen Vorspannkraft zu belasten, die im elastischen Bereich der Schraube liegt oder auch, um die Schraube mit nur geringen Vorspannkräften zu belasten. Der Einsatz von neuen Konstruktionswerkstoffen wie z.B. Magnesium, Aluminium oder Kunststoff, vor allem für den Leichtbau in der Automobil- oder Flugzeugindustrie lässt sowohl den Bedarf, als auch die Anforderungen an die Drehmomentwerkzeuge ansteigen. Durch diese neuen Werkstoffe steigt nämlich die Zahl der empfindlichen Schraubverbindungen. Die geringere Zugfestigkeit dieser Leichtbau-Werkstoffe im Vergleich zu Stahlwerkstoffen, würde bei einer Überbeanspruchung der Schraubverbindung zu Beschädigungen des Gewindes führen, die diese teuren Bauteile unbrauchbar machen würden.

Drehmomentschlüssel mit digitalen Drehmomentanzeigen zählen durch die DE 20 2008 005 705 U1 zum Stand der Technik. In der DE 20 2007 018 043 U1 wird ein Drehmomentschlüssel beschrieben, bei welchem die angezeigten Ziffern mit einem beleuchteten Display unterlegt sind, wobei für den Benutzer durch die Farbe ein bestimmter Drehmomentbereich signalisiert wird. Vor allem beim Arbeiten an unübersichtlichen Stellen ist die Ablesbarkeit erschwert.

Aus dem Gebrauchsmuster DE 20 2009 002 124U1 ist ein Drehmomentschlüssel mit einer Anzeigeeinheit, welche an dem Werkzeugschaft des Drehmomentschlüssels angeordnet ist, bekannt. Über die Anzeigeeinheit lassen sich wenigstens zwei verschiedene optische Signale anzeigen, wobei die Anzeigeeinheit den Werkzeugschaft ringförmig umgibt. Dadurch wird ein optisches Signal zum Erkennen des anliegenden Drehmoments umfangsseitig der Anzeigeeinheit in alle radialen Richtungen emittiert, so dass ein Benutzer auch ohne den freien Blick auf das Anzeigemodul erkennen kann, in welchem Drehmomentbereich sich ein gerade anliegendes Drehmoment befindet. Zur Erzeugung der optischen Signale ist in der Anzeigeeinheit wenigstens ein Lichtemitter, beispielsweise in Form von Licht emittierenden Dioden (LEDs), vorgesehen.

Mit Head-up-Display ist ein Anzeigenfeld bezeichnet, bei dem der Kopf beim ablesen oben gelassen werden kann. Das Anzeigefeld befindet sich immer in Blickrichtung. Eine Blickfeldanzeige ist ein Anzeigesystem, bei dem für den Nutzer, wie z.B. Piloten Informationen in sein Sichtfeld projiziert werden. In der Luftfahrzeugtechnik ist diese Technik schon seit langem bekannt. Seit neuerem findet diese Technik häufig auch Einzug in die Autoindustrie. Solche Head-up-Displays bestehen üblicherweise aus einem Projektor, welcher ein Bild erzeugt, und einer Projektionsfläche. Diese Projektionsfläche ist eine spiegelnde, lichtdurchlässige Scheibe. Eine geeignete Optikanordnung mit Kollimator und Umlenkung leitet das Bild auf diese Projektionsfläche. Ein Nutzer eines Head-up-Displays erfasst somit die gespiegelten Informationen, welche von dem Projektor erzeugt werden und gleichzeitig die hinter der Projektionsfläche liegende reale Welt. In der Luftfahrt werden kleine spezielle Bildröhren eingesetzt, die das entsprechende Bild erzeugen. Bildröhren erzeugen eine sehr große Leuchtstärke, dadurch wird keine zusätzliche Lichtquelle benötigt. Als Lichtquelle dienen aber oft auch LEDs. Die Helligkeit des Bildes wird abhängig vom Umgebungslicht über einen Fotosensor gesteuert. Das Bild wird dabei durch ein farbiges hochauflösendes TFT-Display erzeugt.

Die DE 202008018265 U1 beschreibt eine Vorrichtung mit einem Schraubwerkzeug mit elektronischer Drehmomentbegrenzung. Dabei weist das Schraubwerkzeug als Kraftschrauber einen steuerbaren elektrischen oder pneumatischen oder hydraulischen Antrieb sowie einen integrierten Drehmomentsensor und/oder Drehwinkelsensor auf. Ferner ist eine Eingabe-Steuer-Dokumentationseinheit vorgesehen, an der prozessspezifische Vorgabedaten, insbesondere Drehmomentwerte für einen Schraubvorgang eingebbar sind, die den Schraubvorgang unter Einbeziehung der Messwerte des Drehmomentsensors und/oder des Drehwinkelsensors steuert und für eine Dokumentation des Schraubvorgangs diesem zugeordnete Schraubvorgangsdaten, insbesondere Anzugsdrehmomente erfasst und speichert. Die Eingabe-Steuer-Dokumentationseinheit ist modular aufgebaut. Die Eingabe-Steuer-Dokumentationseinheit enthält einen vom Schraubwerkzeug unabhängigen und separaten Computer mit einem installierten Schraubprogramm. Die Eingabe-Steuer-Dokumentationseinheit umfasst weiterhin ein Steuergerät-Display. Die Vorrichtung ist für einen Datentransfer von Benennungsdaten und Steuerungsdaten sowie gegebenenfalls einen Transfer von Schraubteilprogrammen und Vorberechnungsergebnissen ausgelegt.

Aus der DE 20 2010 015 259 U1 ist ein Drehmomentschlüssel bekannt, der wenigstens einen Schlüsselkörper mit einem Werkzeugkopf aufweist, welcher seinerseits ein Werkzeuganschlussteil umfasst. Das Werkzeuganschlussteil ist wahlweise in Vorwärtsrichtung oder Rückwärtsrichtung drehbar. Wenigstens einen Drehmoment-Dehnungsbalken ist in den Schlüsselkörper aufgenommen. Ein mit dem Werkzeugkopf des Schlüsselkörpers verbundenes Ende nimmt dabei ein von dem Werkzeugkopf ausgeübtes Drehmoment auf. Ein Drehmomentsensor ist auf einer Oberfläche des Drehmoment-Dehnungsbalkens montiert, um den Wert eines Drehmoments zu detektieren, welches auf den Drehmoment-Dehnungsbalken wirkt. Das Drehmoment wird in ein Drehmomentwertsignal umgewandelt. Ein Detektions- und Verarbeitungsschaltkreis ist in dem Schlüsselkörper integriert, um jeweils einen dem Drehmomentwertsignal entsprechenden Drehmomentwert darzustellen. Eine Drahtlosübertragung von Daten des Drehmomentwerts wird an einen Steuerungsempfänger übertragen, welcher die Drehmomentwertdaten von dem Detektionsschaltkreis empfängt, wobei der Steuerungsempfänger dazu ausgelegt ist, zur Anwendung der empfangenen Drehmomentwertdaten das elektronische Gerät mit einem entfernten elektronischen Gerät verbunden zu sein. Dort wird eine Displayschnittstelle beschrieben, die mit dem Mikroprozessor verbunden ist, um die Drehmomentwertdaten in ein Drehmomentwert-Darstellungssignal umzuwandeln. Eine Displayvorrichtung ist mit der Displayschnittstelle verbunden, um das Drehmomentwert- von der Displayschnittstelle zu verarbeiten und dann darzustellen.

Die US 2007 018 0674 A1 beschreibt ein Automatisierungssystem für Befestigungselemente zum Befestigen der Befestigungselemente an einem Trägersubstrat. Das System umfasst dabei ein Projektionssystem zum Projizieren eines Bildes auf das Substrat an einer vorbestimmten Stelle für ein korrektes Befestigungselement, das auf dem Substrat zu installieren ist. Dabei werden einerseits Daten bezüglich des richtigen Befestigungselements und des Substrats von einem Computer, der betriebsmäßig zum Projektionssystem gehört gespeichert, und andererseits Daten bezüglich des vorbestimmten Ortes auf dem Substrat, an dem das korrekte Befestigungselement installiert werden soll, gespeichert.

Aus der deutschen Offenlegungsschrift DE 102012206962 A1 ist eine Head-Up-Anzeige bzw. ein Head-Up-Display bekannt, welche ein virtuelles Bild für einen Beobachter erzeugen. Das virtuelle Bild wird auf einem Reflektor, welcher von einer Windschutzscheibe oder ähnlichem gebildet wird, dargestellt. Dazu wird Licht von einer Head-Up-Einheit (Projektor) von der Projektionsfläche reflektiert. Eine Head-Up-Einheit enthält eine Lichtquelle, die Licht zum Darstellen eines Videos emittiert. Ferner enthält der Projektor einen Spiegel, der den optischen Lichtpfad steuert, und eine konkave Linse für eine Anzeige auf der Windschutzscheibe.

Aus der deutschen Offenlegungsschrift DE 102011001429 A1 ist ein herkömmliches Fahrzeug-Head-Up-Display, welches auch als HUD-Vorrichtung bezeichnet wird, bekannt. Die HUD-Vorrichtung zeigt eine lichtaussendende Abbildung auf einer Anzeige an und projiziert die Anzeigeabbildung auf ein Projektionselement, wie z. B. eine Windschutzscheibe. Demgemäß zeigt die HUD-Vorrichtung eine virtuelle Abbildung von fahrzeugbezogenen Informationen an. Als eine Art einer solchen HUD-Vorrichtung ist eine Vorrichtung, welche eine Anzeigeabbildung einer Anzeige auf einem Reflexionsspiegel, wie z. B. einem konkaven Spiegel, reflektiert und diese reflektierte Abbildung auf ein Projektionselement projiziert ein Fahrzeug-Head-Up-Display vorgesehen, welches eine Anzeige, ein optisches System, einen Motor und einen Untersetzungsgetriebemechanismus enthält. Die Anzeige ist konfiguriert, um eine lichtaussendende Abbildung anzuzeigen. Das optische System enthält einen Reflexionsspiegel, welcher relativ zur Anzeige drehbar angeordnet ist, um die durch die Anzeige angezeigte Abbildung zu reflektieren. Das optische System ist konfiguriert, um die auf dem Spiegel an einem Projektionselement des Fahrzeuges reflektierte Abbildung zu projizieren, und dabei eine virtuelle Abbildung von fahrzeugbezogenen Informationen auf das Projektionselement anzuzeigen. Der Motor ist derart konfiguriert, dass er ein Drehmoment erzeugt, um einen Drehwinkel des Spiegels in Übereinstimmung mit einem Einstellbefehl von außen einzustellen. Die virtuelle Abbildung ist in einem anzeigbaren Bereich des Drehwinkels des Spiegels darstellbar.

Die WO 2011/028 362 A1 beschreibt ein Verfahren und eine Vorrichtung zum Installieren von Befestigungselementen, bei denen die Befestigungselemente unter Verwendung eines Bildverarbeitungssystems und eines Computers identifiziert werden. Es werden Installationsanweisungen auf Grundlage der Identität des Befestigungselements generiert. Das Befestigungselement wird identifiziert, indem ein elektronisches Bild des Befestigungselements aufgezeichnet wird und das Bild drahtlos an den Computer übertragen wird, wo es von einem Bilderkennuungsprogramm verarbeitet wird, um die Identität des Befestigungselements zu bestimmen. Nach der Identifizierung ruft der Computer die Installationsanweisungen für das Befestigungselement aus einer Datenbank ab und überträgt diese Installationsanweisungen drahtlos an ein Tool, das zur Installation des Befestigungselements verwendet wird. Die Identifizierung des Befestigungselements erfolgt schnell und automatisch, wodurch falsche Installationen reduziert oder beseitigt werden können. In einigen Ausführungsformen kann das Aufzeichnen des Bildes des Befestigungselements bzw. das Aufzeichnen eines Bildes anderer Merkmale in der Installationsumgebung in der Nähe des Befestigungselements umfassen, das verwendet werden kann, um die Überprüfung der Identität des Befestigungselements zu unterstützen und geeignete Installationsanweisungen auszuwählen. Nachteil bei dieser Anordnung ist, dass der Anwender nicht unmittelbar die genutzten Daten und ggf. Instruktionen, wie z.B. welche Schraube anzuziehen ist bzw. in welcher Reihenfolge sehen kann. Hierfür muss er sich jedes Mal zur Anzeige des Computers bewegen.

### Offenbarung der Erfindung

Aufgabe der Erfindung ist es, ein Anzeigensystem für ein Drehmomentwerkzeug zu schaffen, welches zu einer Gewichtsreduzierung des Drehmomentwerkzeugs fuhrt. Weiterhin ist es Aufgabe der Erfindung, das Anzeigesystem so auszugestalten, dass es dem Anwender viele Informationen liefert, ohne von seiner Tätigkeit abgelenkt zu werden.

Erfindungsgemäß wird die Aufgabe dadurch gelöst, dass bei einem Drehmomentwerkzeug mit einem Anzeigensystem der eingangs genannten Art, welches zum Messen und/oder Ausbringen eines Drehmoments vorgesehen ist,
f) die Darstellungsvorrichtung als Head-up- Display ausgebildet ist, welche aus einer Projektionsfläche gebildet wird, in die die Anzeige mittels Projektor projiziert wird, wobei
g) die Projektionsfläche (16) an einer brillenartigen Halterung vorgesehen ist, welche die Anzeige mittels des Projektors unmittelbar vor ein Auge eines Anwenders projiziert und
h) eine Kamera an dem Drehmomentwerkzeug und/oder einer brillenartigen Halterung vorgesehen ist, welche das Werkstück erfasst und das Drehmomentwerkzeug dafür ausgelegt ist, dass durch Bilderkennung das richtige Drehmoment aus einer Datenbank zur automatischen Einstellung des Drehmomentwerkzeugs abgefragt wird.

Das Prinzip der Erfindung besteht darin, das Anzeigesystem nicht mehr in dem Drehmomentwerkzeug zu integrieren. Der Nutzer des Drehmomentwerkzeugs kann also das Drehmomentwerkzeug nutzen, ohne ständig auf die dort integrierte Anzeige zu schauen. Er erhält seine Daten bzw. Informationen über eine separate Anzeige. Ein weiterer wesentlicher Vorteil besteht darin, dass keine Anzeigen in dem Drehmomentwerkzeug mehr verbaut werden müssen. Dadurch wird erreicht, dass das Drehmomentwerkzeug nicht mehr große Anzeigen aufweisen müssen. Die Drehmomentwerkzeuge können so nicht nur leichter, sondern auch kleiner ausgebildet werden. Die Elektronik für das Ansteuern der Anzeige entfällt hier zudem.

Die Darstellungsvorrichtung ist als Head-up-Display auch als HuD bezeichnet - ausgebildet, welche aus einer Projektionsfläche gebildet wird, in die die Anzeige mittels Projektor projiziert wird. Solche Darstellungsvorrichtungen sind bereits aus der Flugzeug- oder Fahrzeugtechnik bekannt. Dabei werden die Daten bzw. Informationen oder Grafiken auf eine durchsichtige Projektionsfläche projiziert. Die Darstellungsvorrichtung kann damit so verwendet werden, dass der Nutzer des Drehmomentwerkzeugs seine Augen auf dem zu bearbeitenden Werkstück lassen kann, ohne seinen Blick davon abzuwenden. Der Nutzer schaut einfach durch die Projektionsfläche hindurch und bekommt die erforderlichen Informationen auf diese Projektionsfläche projiziert.

Die Projektionsfläche ist an einer brillenartigen Halterung vorgesehen, welche die Anzeige mittels des Projektors unmittelbar vor ein Auge eines Anwenders projiziert. Diese Maßnahme hat den Vorteil, dass der Nutzer die Hände frei hat. Außerdem kann er das Werkstück mit dem Drehmomentwerkzeug bearbeiten ohne seinen Blick davon abzuwenden. Trotzdem sieht er alle erforderlichen Daten und Informationen.

Vorzugsweise ist bei dem Drehmomentwerkzeug die Übertragungsvorrichtung als Funkverbindung, Infrarotverbindung und/oder als Kabelverbindung zwischen Drehmomentwerkzeug und der separaten Darstellungsvorrichtung ausgebildet. Damit wird der Kontakt des Anzeigesystems zu dem Drehmomentwerkzeug erreicht. Die Übertragung erfolgt üblicherweise als digitale Übermittlung. Bei der Kabelverbindung kann zudem auch ein Kontakt zu einer Energieversorgung für den Projektor vorgesehen sein. Die Übertragung von Daten bzw. Informationen kann dabei direkt von dem Drehmomentwerkzeug zu dem Projektor erfolgen. Es ist aber auch möglich, dass die Daten bzw. Informationen von dem Drehmomentwerkzeug zunächst zu einer externen Datenverarbeitungsanlage übermittelt werden. Dort verarbeitet die externe Datenverarbeitungsanlage die Daten und leitet sie dann an den Projektor weiter. Die aufbereiteten Daten bzw. Informationen von dem Projektor auf die Projektionsfläche projiziert. Die Verwendung einer externen Datenverarbeitungsanlage hat zudem den Vorteil, dass auch andere Informationen auf die Projektionsfläche projiziert werden können.

In einer bevorzugten Ausbildung des Anzeigensystems ist die Projektionsfläche teilweise oder vollständig als ein Brillenglas einer Brille ausgebildet ist, auf welche der Projektor die Anzeige projiziert. Eine Brille ist praktisch allen Nutzern bekannt. Insofern bedarf es keiner Gewöhnung für den Anwender ein solches Anzeigensystem zu nutzen. Die Informationen lassen sich direkt vom Brillenglas ablesen. Das Brillenglas kann entsprechend ausgestaltet sein, bspw. durch eine entsprechende Beschichtung, dass es besonders die Farben des Projektors in das Auge reflektiert.

In einer weiteren vorteilhaften Ausgestaltung des Anzeigensystems für ein Drehmomentwerkzeug ist die separate Darstellungsvorrichtung als LED-Anzeige ausgebildet. Eine LED-Anzeige ist mittlerweile ein relativ kostengünstiges Anzeigensystem. Die LED-Anzeige kann dabei gleichzeitig als Projektor und Projektionsfläche ausgebildet sein. Die LEDs sind durchsichtig und nur der Teil wird zum Leuchten angesteuert, der für die Darstellung von Information erforderlich ist. Eine andere Variante besteht darin, dass ein Leuchtmittel die LED-Anzeige durchleuchtet. Die LED-Anzeige wird dabei derart angesteuert, dass einige Bereiche die Information abbilden. Das Bild, welches dabei entsteht, wird auf die Projektionsfläche projiziert.

In einer besonderen Variante des Anzeigensystems ist eine Kamera an dem Drehmomentschlüssel und/oder der brillenartige Halterung vorgesehen. Dadurch können die Vorgänge beim Betätigen des Drehmomentschlüssels oder des Werkstücks erfasst werden. Die Informationen können dabei beispielsweise zur Archivierung aufgezeichnet werden. Außerdem kann das Werkstück erfasst werden. Durch geeignete Bilderkennung kann das richtige Drehmoment aus einer Datenbank abgefragt werden. Der Drehmomentschlüssel lässt sich dann z.B. automatisch einstellen, ohne dass der Nutzer unmittelbar tätig werden muss.

Eine bevorzugte Ausgestaltung des Anzeigensystems besteht ferner darin, dass das Drehmomentwerkzeug eine Sprachsteuerung und/oder einen akustischen Signalgeber aufweist. Der Anwender kann das Drehmomentwerkzeug auf diese Weise mit Sprache steuern bzw. einstellen. Die Informationen, die er von dem Anzeigensystem erhält kann er somit unmittelbar umsetzen. Dabei kann der Drehmomentschlüssel dem Anwender auch bei Bedarf akustisch signalisieren, wann ein Drehmoment erreicht ist.

Weitere Ausgestaltungen und Vorteile ergeben sich aus dem Gegenstand der Unteransprüche, sowie den Zeichnungen mit den dazugehörigen Beschreibungen. Ein Ausführungsbeispiel ist nachstehend unter Bezugnahme auf die beigefügten Zeichnungen näher erläutert.

### Kurze Beschreibung der Zeichnung

- Fig. 1: zeigt in einer Prinzipskizze ein erfindunggemäßes Drehmomentwerkzeug.
- Fig. 2: zeigt als Blockdiagram den schematischen Aufbau eines Anzeigensystems.

### Bevorzugtes Ausführungsbeispiel

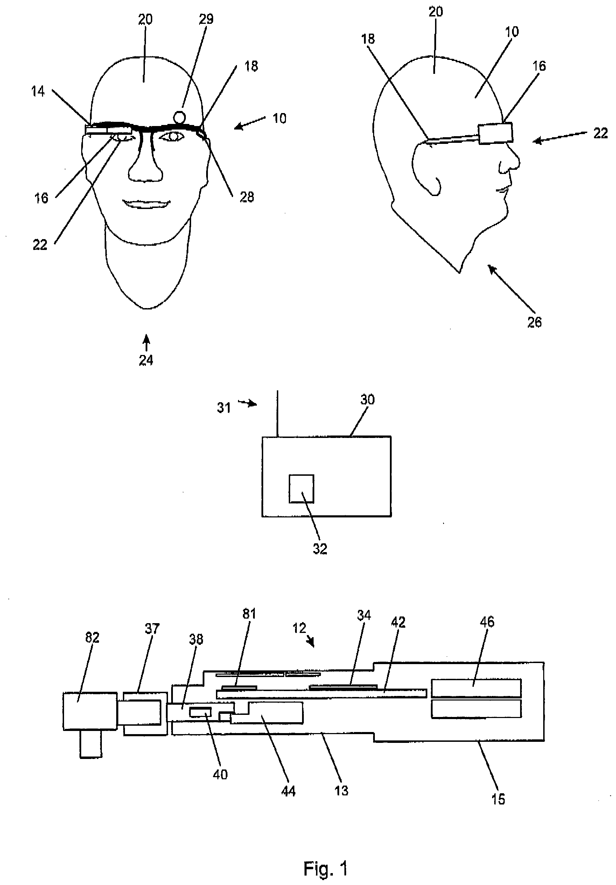

In Fig. 1 wird mit 10 ein Anzeigensystem für ein erfindungsgemäßes Drehmomentwerkzeug 12 bezeichnet. Das Drehmomentwerkzeug 12 weist ein Gehäuse 13 mit einem Griff 15 an einem Ende auf. Das Anzeigensystem 10 enthält einen Projektor 14 und eine Projektionsfläche 16. Die Projektionsfläche 16 ist an einem brillenartigen Gestell bzw. Halterung 18 befestigt und kann so von einem Nutzer 20, wie eine Brille, getragen werden. Die Projektionsfläche 16 besteht aus einem teilweise reflektierendem und teilweise durchsichtigem Glas bzw. Kunststoff. Die Projektionsfläche 16 ist dabei vor wenigstens einem Auge 22 des Nutzers 20 angeordnet. Der Kopf des Nutzers 20 wird hier schematisch einmal von Vorne 24 und einmal von einer Seite 26 dargestellt. Das brillenartige Gestell 18 wird wie eine Brille getragen und hat einen Empfangsgerät 28, um Daten bzw. Informationen des Drehmomentwerkzeugs 12 über beispielsweise über Funk zu empfangen. Mittels Kamera 29 kann die Aktion des Nutzers mit dem Drehmomentwerkzeug 12 überwacht werden. Hierdurch lässt sich die genaue Position des Drehmomentwerkzeugs 12 ermitteln. Alternativ kann über Sensoren 81, welche Bestandteile der Steuerelektronik 42 sind, innerhalb des Drehmomentwerkzeugs 12 die Lage im Raum bestimmt werden. Außerdem ist es möglich eine Schraubverbindung auf dem Anzeigensystem 10 darzustellen und zu kennzeichnen. Ein Anwender erhält somit gegebenenfalls einen Arbeitsplan in dem Anzeigensystem 10. Dadurch lässt sich das Einhalten einer korrekten Reihenfolge beim Anziehen von Mehrschraubenverbindungen sicherstellen.

Die Daten bzw. Informationen des Drehmomentwerkzeugs 12, werden hierzu von einer separaten prozessorgesteuerten Datenverarbeitungsanlage 30 aufbereitet und übertragen. Die Datenverarbeitungsanlage 30 und das Drehmomentwerkzeug 12 sind mit einer Übertragungsvorrichtung 31 ausgerüstet. Die Datenverarbeitungsanlage 30 verfügt dazu über eine Sende- und Empfangseinrichtung 32. Hierüber empfängt die separate Datenverarbeitungsanlage 30 die Daten bzw. Informationen des Drehmomentwerkzeugs 12. Das Drehmomentwerkzeug 12 verfügt über eine entsprechende Sende- und Empfangseinrichtung 34. Anstelle von Funkverbindungen sind auch andere Übertragungsmittel zur Übertragung der Daten möglich, wie z.B. Kabel oder Infrarot. Üblicherweise erfolgt die Übertragung digital.

Der Projektor 14 ist derartig an dem brillenartigen Gestell 18 befestigt, dass die Daten bzw. Informationen auf die Projektionsfläche 16 projiziert werden. Die Projektionsfläche 16 ist einerseits für den Nutzer 20 durchsichtig, reflektiert aber auf der anderen Seite die darauf projizierten Daten. Das jeweilig abzubildende Bild der Daten wird dabei über eine Mikrooptik-Anordnung auf die Projektionsfläche 16 projiziert. Der Projektor 14 weist daher einen hier nicht sichtbaren Darstellungsgenerator, wie eine LED-Anzeige, auf. Eine Lichtquelle, durchstrahlt diese LED-Anzeige und bildet die Information über die auf der Mikrooptik-Anordnung auf die Projektionsfläche 16 ab.

Eine Alternative zu den getrennten Bestandteilen Projektionsfläche 16 und Projektor 14 besteht darin, diese als Einheit auszubilden. Die Projektionsfläche 16 ist gleichzeitig auch der Projektor 14, der angesteuert wird. Die Projektionsfläche 16 besteht dabei aus einer durchsichtigen LED-Anzeige, die geeignete angesteuert, als gleichzeitig als Projektor 14 dient. Die Bereiche, zur Darstellung werden dann angesteuert, so dass der Nutzer 20 bzw. ein Betrachter die aufbereiteten Daten sehen kann.

Das Drehmomentwerkzeug 12 beinhaltet ein Verbindungsglied 37, in welches Einsteckwerkzeuge 82 eingesetzt werden können, mit einem Messkopfstück 38. Das Messkopfstück 38 weist Sensoren 40 auf, um ein Drehmoment und gegebenenfalls einen Winkel zu erfassen. Das Drehmomentwerkzeug 12 verfügt über eine Steuerelektronik 42 und einen mechanischen Auslösemechanismus 44. Der Auslösemechanismus 44 löst aus und signalisiert damit, dass ein bestimmtes voreingestelltes Drehmoment erreicht ist. Die Steuerelektronik 42 wird von einer Energieversorgung 46 gespeist. Die Energieversorgung 46 kann aus einem Netzkabel bestehen. Üblicherweise wird aber ein Akkumulator eingesetzt werden, um ausreichende Betätigungsfreiheit zu haben.

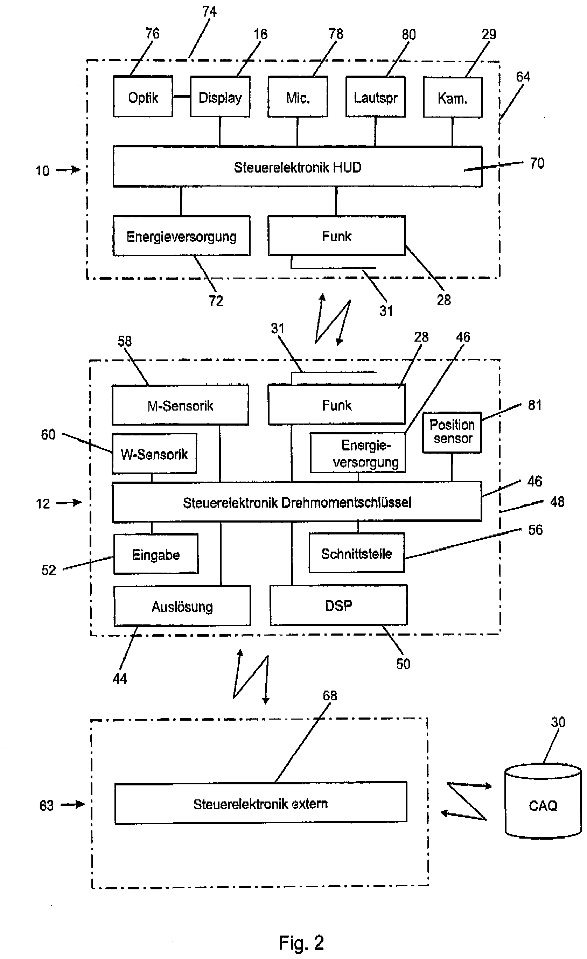

In Fig. 2 wird als Blockdiagram der schematische Aufbau des Anzeigensystems 10 für das Drehmomentwerkzeug 12 dargestellt. Ein mittlerer Block 48 umfasst das Drehmomentwerkzeug 12 mit der Steuerelektronik 42. Das Drehmomentwerkzeug 12 verfügt über einen digitalen Signalprozessor 50, auch abgekürzt DSP genannt. Ferner ist eine Eingabe 52 zur Steuerung des Drehmomentwerkzeugs 12 vorgesehen. Diese kann einerseits als Tastatur oder auch als Spracheingabe ausgebildet sein. In dem Block 48 ist ferner ein Auslösemechanismus 44 des Drehmomentwerkzeugs 12 dargestellt. Über eine Schnittstelle 56 können bidirektional zum Drehmomentwerkzeug 12 Daten übermittelt werden. Mit 58 werden eine Messsensorik für das Drehmoment und mit 60 eine Winkelmesssensorik des Drehmomentwerkzeugs 12 bezeichnet. Die Messsensorik 58 für das Drehmoment und die Winkelmesssensorik 60 enthaltend die Sensoren 40. Die Energieversorgung 46, welche üblicherweise als Batterie oder Akkumulator ausgebildet ist, liefert dem Drehmomentwerkzeug 12 die elektrische Energie um dessen elektrischen Komponenten zu betreiben. Das Drehmomentwerkzeug 12 verfügt ferner über eine Sende- bzw. Empfangseinrichtung 34 mit der Daten über Funk ausgetauscht werden können. Die Daten werden dabei bspw. direkt zwischen dem Anzeigensystem 10 oder mit der Datenverarbeitungsanlage 30 ausgetauscht. Sowohl die Datenverarbeitungsanlage 30, als auch das Anzeigensystem 10 sind als Blockdiagram 63, 64 dargestellt.

Die Datenverarbeitungsanlage 30 ist mit einer externen Steuerelektronik 68 verbunden. Die Steuerelektronik 68 dient dazu, aufgrund der Informationen in der Datenverarbeitungsanlage 30 das Drehmomentwerkzeug 12 zu steuern. Hier können beispielsweise die zu verwendenden Drehmomente übertragen werden. Die Übertragung der Daten zwischen den einzelnen Komponenten kann kabellos über Funk bzw. Infrarot oder über ein Datenkabel erfolgen.

Das Anzeigensystem 10 ist ebenfalls als Blockdiagramm 64 dargestellt und enthält eine Steuerelektronik 70. Das Anzeigensystem 10 ist als Head-up-Display - HuD - ausgebildet. Das Anzeigensystem 10 verfügt ferner über eine Energieversorgung 72, um die elektrischen Komponenten mit ausreichender elektrischer Spannung zu versorgen. Das Anzeigensystem 10 enthält eine Darstellungsvorrichtung 74. In dem die Darstellungsvorrichtung 74 besteht aus einer Optikanordnung 76, dem Projektor 14 und der Projektionsfläche 16. Dabei können, wie bereits oben geschildert, der Projektor 14 und die Projektionsfläche 16 eine Einheit bilden. Üblicherweise kommt hier eine LED-Anzeige zum Einsatz. Das Head-up-Display enthält ein Mikrofon 78, um das Drehmomentwerkzeug 12 zu steuern bzw. um Daten aus der Datenverarbeitungsanlage 30 über Sprachsteuerung abzurufen. Weiterhin ist ein Lautsprecher 80 vorgesehen, über welchen akustisch signalisiert werden kann, wann ein Drehmoment erreicht worden ist. Auch andere Informationen können über Sprachausgabe oder verschiedenartige Töne oder Tonsequenzen mittels des Lautsprechers 80 ausgegeben werden. Der Datenaustausch erfolgt über die Sende- und Empfangseinrichtung 32 des Head-up-Displays.

## Patentansprüche

1. Drehmomentwerkzeug (12) mit einem Anzeigensystem (10), welches zum Messen und/oder Ausbringen eines Drehmoments vorgesehen ist, enthaltend
a) ein Gehäuse (13) mit einem Griff (15) am einen Ende, wobei eine Messeinrichtung (40, 58) zum Erfassen des Drehmoments in dem Gehäuse (13) angeordnet ist,
b) ein Verbindungsglied (37) an dem anderen Ende des Gehäuses (13), welches das Drehmoment zu einem Werkstück überträgt,
c) eine prozessorgesteuerte Steuereinrichtung (42, 50) zur digitalen Verarbeitung der eingestellten und/oder gemessenen Daten und
d) eine Anzeige (16), welche mit der Steuereinrichtung (42, 50) kooperiert und graphische Anzeigeninhalte und/oder Daten, wie das jeweils anliegende bzw. eingestellte Drehmoment anzeigt, wobei
e) eine Übertragungs- (28, 34) und eine als separate Darstellungsvorrichtung (74) zur Übertragung und Darstellung der graphischen Anzeigeninhalte und/oder der Daten vorgesehen ist,
**dadurch gekennzeichnet, dass**
f) die Darstellungsvorrichtung (74) als Head-up- Display ausgebildet ist, welche aus einer Projektionsfläche (16) gebildet wird, in die die Anzeige mittels Projektor (14) projiziert wird, wobei
g) die Projektionsfläche (16) an einer brillenartigen Halterung (18) vorgesehen ist, welche die Anzeige mittels des Projektors (14) unmittelbar vor ein Auge eines Anwenders projiziert und
h) eine Kamera (29) an dem Drehmomentwerkzeug (12) und/oder der brillenartigen Halterung (18) vorgesehen ist, welche das Werkstück erfasst und das Drehmomentwerkzeug (12) dafür ausgelegt ist, dass durch Bilderkennung das richtige Drehmoment aus einer Datenbank zur automatischen Einstellung des Drehmomentwerkzeugs (12) abgefragt wird.

2. Drehmomentwerkzeug (12) mit einem Anzeigensystem (10), welches zum Messen und/oder Ausbringen eines Drehmoments vorgesehen ist, nach Anspruch 1, **dadurch gekennzeichnet, dass** die Übertragungsvorrichtung (31) als Funkverbindung, Infrarotverbindung und/oder als Kabelverbindung zwischen Drehmomentwerkzeug (12) und der separaten Darstellmigsvorrichtung (74) ausgebildet ist.

3. Drehmomentwerkzeug (12) mit einem Anzeigensystem (10), welches zum Messen und/oder Ausbringen eines Drehmoments vorgesehen ist, nach einem der Ansprüche 1 oder 2, **dadurch gekennzeichnet, dass** die separate Darstellungsvorrichtung (74) als LED-Anzeige ausgebildet ist.

4. Drehmomentwerkzeug (12) mit einem Anzeigensystem (10), welches zum Messen und/oder Ausbringen eines Drehmoments vorgesehen ist, nach einem der Ansprüche 1 bis 3, **dadurch gekennzeichnet, dass** das Drehmomentwerkzeug (12) eine Sprachsteuerung (78) und/oder einen akustischen Signalgeber (80) aufweist.

## Claims

1. Torque tool (12) with a display system (10), which is provided to measure and/or apply a torque, comprising
a) a housing (13) with a handle (15) on one end, whereby a measurement gauge (40, 58) is arranged in the housing (13) to detect the torque,
b) a connecting member (37) on the other end of the housing (13), which transfers the torque to a workpiece,
c) a processor-controlled control unit (42, 50) to digitally process the data settings and/or measured data
d) a display (16), which cooperates with the control unit (42, 50) and graphically displays content and/or data such as the current torque applied and/or the torque setting, whereby
e) a transmission device (28, 34) and a separate display device (74) are provided to transmit and display the graphic content and/or the data,
**characterized in that**
f) the display device (74) is designed as a head-up display, which is formed by a projection screen (16) on which the display is projected by means of a projector (14), wherein
g) the projection screen (16) is provided on a glasses-like holder (18), which projects the display by means of the projector (14) directly in front of one eye of a user, and
h) a camera (29) is provided on the torque tool (12) and/or the glasses-like holder (18), which detects the workpiece and for which the torque tool (12) is designed so that via image recognition the correct torque is queried from a database to automatically set the torque tool (12).

2. Torque tool (12) with a display system (10), which is provided to measure and/or apply a torque, according to Claim 1, **characterized in that** the transmission device (31) is designed as a wireless connection, infrared connection, and/or cable connection between the torque tool (12) and the separate display device (74).

3. Torque tool (12) with a display system (10), which is provided to measure and/or apply a torque, according to one of Claims 1 or 2, **characterized in that** the separate display device (74) is designed as an LED display.

4. Torque tool (12) with a display system (10), which is provided to measure and/or apply a torque, according to one of Claims 1 to 3, **characterized in that** the torque tool (12) is equipped with voice control (78) and/or an acoustic signal generator (80).

## Revendications

1. Outil dynamométrique (12) muni, d'un système d'affichage (10) et prévu pour mesurer et/ou produire un couple de rotation, comprenant
(a) un boîtier (13) muni d'une poignée (15) située à une extrémité, un dispositif de mesure (40, 58) destiné à saisir le couple de rotation étant disposé dans le boîtier (13),
(b) un organe de liaison (37) situé à l'autre extrémité du boîtier (13) et qui transmet le couple de rotation à une pièce,
(c) un dispositif de commande (42, 50) commandé par processeur et destiné au traitement numérique des données paramétrées et/ou mesurées et
(d) un dispositif d'affichage (16) qui coopère avec le dispositif de commande (42, 50) et affiche des contenus d'affichage graphiques et/ou des données, tel que chaque couple de rotation appliqué et/ou paramétré,
(e) un dispositif de transmission (28, 34) et un dispositif de représentation séparé (74) étant prévus pour la transmission et la représentation des contenus d'affichage graphiques et/ou des donnée,
**caractérisé en ce que**
(f) le dispositif de représentation (74) étant réalisé sous forme de dispositif d'affichage tête haute qui est formé à partir d'une surface de projection (16) sur laquelle l'affichage est projeté au moyen d'un projecteur (14),
(g) la surface de projection (16) étant prévue sur une fixation (18) semblable à une paire de lunettes qui projette l'affichage au moyen du projecteur (14) directement devant l'un des yeux d'un utilisateur et
(h) une caméra (29) est prévue sur l'outil dynamométrique (12) et/ou la fixation (18) semblable à une paire de lunettes qui saisit la pièce et l'outil dynamométrique (12) est dimensionné de sorte que le bon couple de rotation est demandé par imagerie dans une banque de données afin de paramétrer automatiquement l'outil dynamométrique (12).

2. Outil dynamométrique (12) muni d'un système d'affichage (10) qui est prévu pour mesurer et/ou produire un couple de rotation selon la revendication 1, **caractérisé en ce que** le dispositif de transmission (31) est réalisé sous forme de connexion radio, connexion infrarouge et/ou de connexion câblée entre l'outil dynamométrique (12) et le dispositif de représentation séparé (74).

3. Outil dynamométrique (12) muni d'un système d'affichage (10) qui est prévu pour mesurer et/ou produire un couple de rotation selon l'une quelconque des revendications 1 ou 2, **caractérisé en ce que** le dispositif de représentation séparé (74) est réalisé sous forme de dispositif d'affichage à LED.

4. Outil dynamométrique (12) muni d'un système d'affichage (10) qui est prévu pour mesurer et/ou produire un couple de rotation selon l'une quelconque des revendications 1 à 3, **caractérisé en ce que** l'outil dynamométrique (12) présente une commande vocale (78) et/ ou un transmetteur de signaux acoustiques (80).
